# EUROPÄISCHE PATENTSCHRIFT

(11) **EP 3 078 432 B1**
(45) Veröffentlichungstag und Bekanntmachung des Hinweises auf die Patenterteilung: **18.10.2017**
(21) Anmeldenummer: 15162852.6
(22) Anmeldetag: 08.04.2015
(51) Int. Cl.: B21D 28/26, B23K 26/00, B23K 26/38, B26D 3/28

(54) **WERKZEUG FÜR EINE BEARBEITUNGSMASCHINE**
TOOL FOR A PROCESSING MACHINE
OUTIL POUR UNE MACHINE D'USINAGE

(43) Veröffentlichungstag der Anmeldung: 12.10.2016
(73) Patentinhaber: TRUMPF Werkzeugmaschinen GmbH + Co. KG, 71254 Ditzingen (DE)
(72) Erfinder: Tatarczyk, Alexander, 78606 Seitingen-Oberflacht (DE); Wilhelm, Markus, 70839 Gerlingen (DE); Ockenfuss, Simon, 71034 Böblingen (DE); Guthöhrlein, Björn, 71638 Ludwigsburg (DE); Fretschner, Michael, 72076 Tübingen (DE)
(74) Vertreter: Prüfer & Partner mbB Patentanwälte · Rechtsanwälte

(56) Entgegenhaltungen:
- EP-A1- 2 008 752
- EP-A2- 1 947 045
- DE-A1- 3 311 270
- US-A1- 2007 186 746

## Beschreibung

Die Erfindung betrifft ein Werkzeug für eine Bearbeitungsmaschine, insbesondere ein Werkzeug, das eine Schutzfolie von einem zu bearbeitenden Bereich eines Werkstücks entfernt.

Schutzfolien auf Werkstücken, beispielsweise auf zu bearbeitenden Blechen, beeinträchtigen die Bearbeitbarkeit des Werkstücks. Beispielsweise kommt es beim Schneiden von Blechen mittels einer Laserschneidmaschine auf der Seite, auf der der Laserstrahl aus dem Blech austritt, bei einer auf dieser Fläche aufgebrachten Schutzfolie durch ein Schmelzen und ein teilweises Ablösen der Schutzfolie zu einer Gratbildung, so dass solche Bleche nicht automatisiert bearbeitbar sind. In weiteren Anwendungsfällen beeinträchtigt auch eine Schutzfolie auf der dem Laserstrahl zugewandte Fläche die Bearbeitung.

Es sind bereits mehrere Verfahren bekannt, um diese Schutzfolien von den zu bearbeitenden Flächen zu entfernen.

Beispielsweise wird mittels des Laserstrahls der Maschine eine Bahn der Schutzfolie abgedampft. Dazu wird für ein Entfernen der Folie auf der während der Schneidbearbeitung dem Laserstrahl abgewandten Seite eine zu der gewünschten Werkstückkontur gespiegelte Kontur abgefahren und das Blech anschließend manuell gewendet. Dabei ist aber ein manueller Arbeitsgang erforderlich und in die Genauigkeit des Abdampfens fließen Toleranzen des Blechs ein, so dass dies aufwändig und nicht prozesssicher ist.

Ferner gibt es eigenständige Maschinen, um die Schutzfolie ganz oder teilweise von den Oberflächen der zu bearbeitenden Bleche abzulösen. Zum Ablösen von Teilen der Folie wird die Folie manuell oder automatisiert eingeritzt oder geschnitten. Hierbei ist aber immer eine separate Maschine oder ein erheblicher manueller Aufwand erforderlich. Bei einem Anritzen oder Schneiden besteht außerdem die Gefahr, dass die Blechoberfläche beschädigt wird.

Der Erfindung liegt die Aufgabe zugrunde, ein Werkzeug und ein Verfahren zur Verfügung zu stellen, mit denen eine Schutzfolie von zu bearbeitenden Bereichen von Werkstücken wirtschaftlich und prozesssicher entfernt werden kann.

Die Aufgabe wird durch ein Werkzeug gemäß Anspruch 1 und ein Verfahren gemäß Anspruch 13 gelöst.

Mit dem erfindungsgemäßen Werkzeug kann eine Schutzfolie durch eine Spitze, an die zwei Verdrängkanten, die abgerundet sind oder eine Fase aufweisen, angrenzen von einer zu bearbeitenden Fläche in einem Bereich verdrängt werden. Durch ein Eindringen der Spitze in die Schutzfolie und ein Bewegen des Werkstücks entlang einer Bahn, wobei das Werkzeug so verdreht ist, dass die Spitze eines Verdrängabschnitts relativ zur Bewegung zu dem Werkstück vorauseilt, kann die Schutzfolie entlang der Bahn verdrängt werden. Die Bahn kann geradlinig sein oder auch Kurven oder Ecken aufweisen. Da hier kein Schneiden von Bahnen, sondern lediglich ein Trennen und ein Verdrängen erfolgt, entstehen keine Folienschnipsel. Solche Folienschnipsel könnten nicht prozesssicher abgeführt werden, so dass ein Laserschnitt durch Bilden von Schlacke und Grat und durch Perlenbildung negativ beeinflusst würde, was hier vermieden wird.

Die Erfindung wird anhand von Ausführungsbeispielen unter Bezugnahme auf die beigefügten Zeichnungen erläutert.

Insbesondere zeigen
- Fig. 1: eine Bearbeitungsmaschine in einer Ausführungsform einer kombinierten Stanz-Laser-Maschine;
- Fig. 2: ein Werkzeug mit einem Stempel mit einem erfindungsgemäßen Verdrängabschnitt;
- Fig. 3a: eine isometrische Darstellung eines Stempels mit einem Verdrängabschnitt gemäß einer ersten Ausführungsform;
- Fig. 3b: eine Draufsicht auf den Stempel von Fig. 3a;
- Fig. 3c: eine Seitenansicht des Stempels von Fig. 3a;
- Fig. 4a: eine isometrische Darstellung eines Stempel mit einem Verdrängabschnitt gemäß einer zweiten Ausführungsform;
- Fig. 4b: eine Draufsicht auf den Stempel von Fig. 4a;
- Fig. 4c: eine Seitenansicht des Stempels von Fig. 4a;
- Fig. 4d: einen vergrößerten Abschnitt des Stempels von Fig. 4c
- Fig. 5a: eine exemplarische geradlinige Bahn, durch die ein Bereich erzeugt wird, von dem eine Schutzfolie verdrängt ist;
- Fig. 5b: eine Bahn, durch die ein Bereich erzeugt wird, von dem die Schutzfolie verdrängt ist, für eine Schneidbahn mit einem kleinen Radius;
- Fig. 5c: eine Bahn, durch die ein Bereich für eine Schneidbahn mit einem spitzen Winkel erzeugt wird, von dem eine Schutzfolie verdrängt ist; und
- Fig. 5d: eine vergrößerte Ansicht eines Abschnitts der Bahn in Fig. 5c.

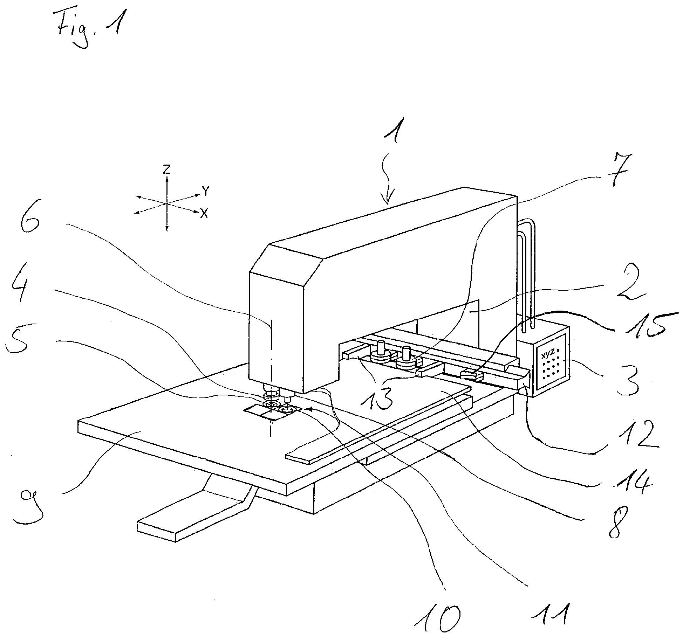

In Fig. 1 ist eine Ausführungsform einer Bearbeitungsmaschine 1 gezeigt. Die Ausführungsform der Bearbeitungsmaschine 1 ist hier eine kombinierte Stanz-Laser-Maschine, mit der sowohl beispielsweise Bleche gestanzt werden können als auch mittels eines Laserstrahls bearbeitet, beispielsweise geschnitten, werden können.

Ein Bestandteil der Bearbeitungsmaschine 1 ist ein C-Rahmen 2. Der C-Rahmen 2 besteht aus einer torsionssteifen Schweißkonstruktion aus Stahl. Der C-Rahmen 2 kann aber auch in einer anderen Form ausgeführt sein.

Am hinteren Ende des C-Rahmen 2 ist eine Steuerungsvorrichtung 3 zum Steuern der Funktionen der Bearbeitungsmaschine 1 vorgesehen.

Die Bearbeitungsmaschine 1 weist am vorderen inneren Ende des oberen Schenkels des C-Rahmens 2 eine obere Werkzeugaufnahme 4 und am vorderen inneren Ende des unteren Schenkels des C-Rahmens 2 eine untere Werkzeugaufnahme 5 auf. In die obere Werkzeugaufnahme 4 kann ein Werkzeugoberteil eines Werkzeugs 7, beispielsweise ein Stanz- oder Umformwerkzeug, aufgenommen werden und in die untere Werkzeugaufnahme 5 kann ein Werkzeugunterteil des Werkzeugs 7 aufgenommen werden.

Die obere Werkzeugaufnahme 4 ist mittels eines nicht gezeigten Stößels in einer axialen Richtung (Z-Richtung) bewegbar und wird mit Hilfe der Steuerungsvorrichtung 3 so angesteuert, dass sie sowohl einen vollständigen Hub ausführen kann als auch in jeder beliebigen Position innerhalb ihres axialen Hubwegs anhalten kann. Ferner ist die obere Werkzeugaufnahme 4, durch die Steuerungsvorrichtung 3 angesteuert, optional um eine axiale Drehachse 6 verdrehbar.

Die untere Werkzeugaufnahme 5 ist optional ebenfalls um ihre Drehachse 6 verdrehbar. Weiterhin ist die untere Werkzeugaufnahme 5 in ihrer axialen Richtung (Z-Richtung) unbeweglich, kann optional aber auch als eine sogenannte aktive Matrize ausgeführt sein. Dann lässt sie sich ebenfalls in ihrer axialen Richtung bewegen sowie, durch die Steuerungsvorrichtung 3 angesteuert, in jeder beliebigen Position ihres axialen Hubwegs anhalten.

Neben der oberen Werkzeugaufnahme 4 und der unteren Werkzeugaufnahme 5 weist die Bearbeitungsmaschine 1 auch einen Laserbearbeitungskopf 8 auf, mit dem beispielsweise eine Blechplatte 14 geschnitten werden kann. In einem Werkstücktisch 9 auf der inneren Seite des unteren Schenkels des C-Rahmens 2 ist eine kreisförmige Öffnung 10 vorgesehen. Der Laserbearbeitungskopf 8 ist mittels einer nicht gezeigten Bewegungseinheit in einer X-Richtung und in einer Y-Richtung sowie, um eine geeignete Fokuslage einzustellen, in der Z-Richtung bewegbar. Die kreisförmige Öffnung 10 legt im Wesentlichen einen Bearbeitungsbereich 11 des Laserbearbeitungskopfs 8 fest.

Der Werkstücktisch 9 weist eine Querschiene 12 mit einem Werkzeugmagazin auf. An der Querschiene 12 sind Spannpratzen 13 zum Festhalten einer Blechplatte 14 angeordnet. Die Spannpratzen 13 können an geeigneten Stellen auf der Querschiene 12 befestigt werden, und können so versetzt werden, dass die Blechplatte 14 sicher gehalten wird, aber die Blechplatte 14 nicht an einer zu bearbeitenden Fläche gegriffen wird. In dem Werkzeugmagazin sind mehrere, hier drei, Werkzeugaufnahmen 15 für mehrere, hier zwei, Werkzeuge 7 gezeigt.

Im Betrieb fährt der Werkstücktisch 9 zum Stanzen oder für eine Laserbearbeitung in einer Y-Richtung gemeinsam mit der Querschiene 12, an der die Spannpratzen 13 befestigt sind, mit denen das Blech 14 gehalten wird, in eine programmierte Position, und die Querschiene 12 fährt in X-Richtung in die programmierte Position, wobei die Blechplatte 14 über den Werkstücktisch 9 gleitet. Um ein Verkratzen der Blechplatte 14 während des Handlings und während des Bearbeitens zu vermeiden, ist die Blechplatte 14 üblicherweise beidseitig mit einer Schutzfolie 29 versehen. Dann wird von der oberen Werkzeugaufnahme 4 ein Stanzhub durchgeführt. Im Anschluss daran wird nach demselben Prinzip die nächste Stanzposition angefahren. Alternativ wird, ausgehend von der programmierten Position eine vorbestimmte Schneidbahn abgefahren, wobei der Laserbearbeitungskopf 8 in Betrieb ist.

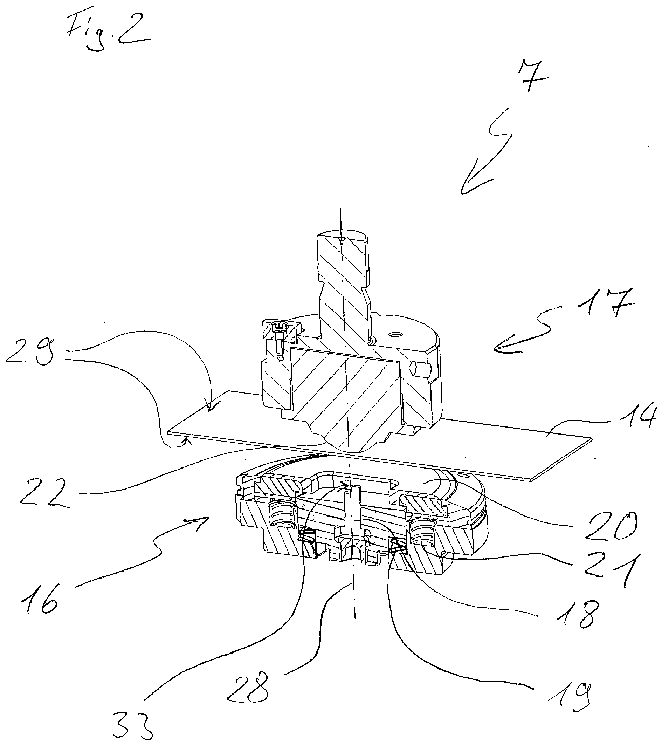

Fig. 2 zeigt eine geschnittene Ansicht eines Werkzeugs 7, das ein Werkzeugunterteil 16 und optional ein Werkzeugoberteil 17 aufweist.

Das Werkzeugunterteil 16 weist einen nachstehend genauer beschriebenen Stempel 18 auf. Der Stempel 18 ist hier über ein Federelement 19 und eine Gleitlagerung federnd in dem Werkzeugunterteil 16 gelagert. Alternativ zur Gleitlagerung können auch andere Lagerelemente vorgesehen sein. In einer weiteren alternativen Ausführungsform ist der Stempel 18 nicht federnd, sondern starr in dem Werkzeugunterteil 16 befestigt.

Ferner ist das Werkzeugunterteil 16 mit einem optionalen Auswerfer 20 versehen. Der Auswerfer 20 ist hier über Spiralfedern 21 federnd vorgesehen. Alternativ können auch andere Federelemente vorgesehen sein.

Das optionale Werkzeugoberteil 17 ist mit einer dem Werkzeugunterteil 16 zugewandten Gleitfläche 22 versehen, um gegebenenfalls eine Gegenkraft zu einer von dem Stempel 18 auf die Blechplatte 14 erzeugten Bearbeitungskraft zu erzeugen. Optional ist die Gleitfläche 22, wie gezeigt, kugelförmig. In einer weiteren alternativen Ausführungsform wird die Gleitfläche 22 von einer rotierbar gelagerten Kugel bereitgestellt. Die Gleitfläche 22 kann optional auch gefedert vorgesehen sein, um gegebenenfalls Toleranzen auszugleichen.

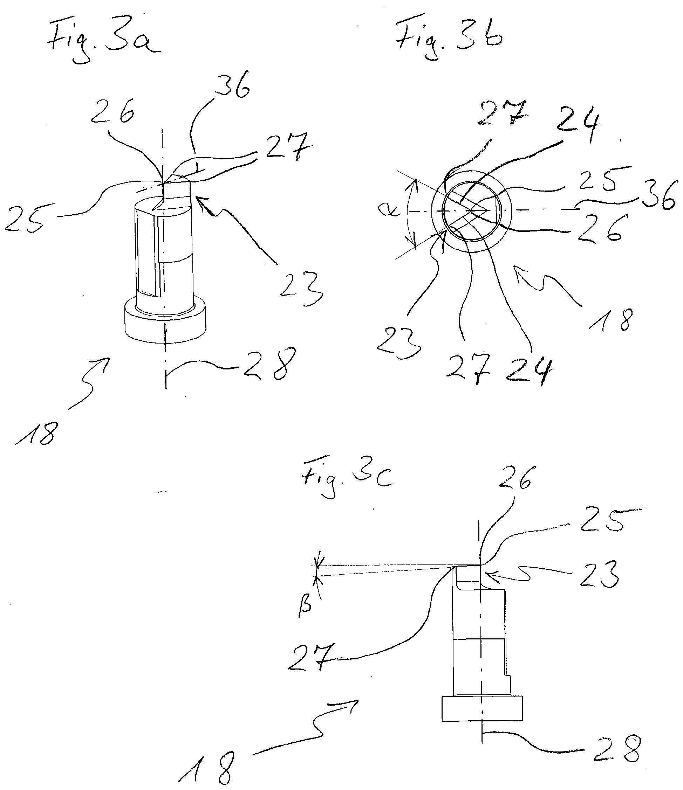

In Fig. 3a ist eine isometrische Darstellung des Stempels 18 in einer ersten Ausführungsform gezeigt. Die Figuren 3b und 3c zeigen jeweils eine Draufsicht und eine Seitenansicht des Stempels 18. Der Stempel 18 weist einen Verdrängabschnitt 23 als ein Keilelement auf. Wie in Fig. 3b zu sehen ist, weist der Verdrängabschnitt 23 zwei Verdrängkanten 24 auf, die sich in einem Punkt einer Achse 28 des Stempels 18, und somit des Verdrängabschnitts 23, schneiden. Die Verdrängkanten schließen senkrecht zu der Achse 28 einen Keilwinkel α zueinander ein. Der Keilwinkel α beträgt 60°, kann aber auch in einem Winkelbereich von ca. ± 10° liegen. Durch die Verdrängkanten 24 wird in Richtung der Achse 28 gesehen ein im Wesentlichen keilförmiger Querschnitt mit einer Spitze 25 gebildet, so dass die Verdrängkanten 24 an der Spitze 25 angrenzen. Die Verdrängkanten 24 haben jeweils ein erstes Ende 26 an der Spitze 25 und ein gegenüberliegendes zweites Ende 27. Die Verdrängkanten 24 schließen mit einer Ebene senkrecht zur Achse 28 einen Freiwinkel β ein. Der Freiwinkel β beträgt hier 2°, kann aber in Abhängigkeit von einer Folienstärke einen anderen Wert annehmen, der größer als 0° ist. Ansonsten besteht die Gefahr, dass eine Blechoberfläche durch die Verdrängkanten 24 beschädigt wird. Ferner weisen die Verdrängkanten 24 eine Symmetrieachse 36 auf.

Die Verdrängkanten 24 sind in dieser Ausführungsform geradlinig und sind verrundet oder weisen eine Fase auf. Wesentlich ist, dass die Verdrängkanten 24 nicht scharfkantig sind, so dass die Schutzfolie 29 nicht durch die Verdrängkanten 24 geschnitten wird. Sonst besteht die Gefahr, dass Folienschnipsel entstehen, die einen Laserschnitt negativ beeinflussen. Die Schutzfolie 29 wird lediglich durch die Spitze 25 getrennt und dann durch die Verdrängkanten verdrängt.

Wie in Fig. 2 gezeigt, ist der Stempel 18 so in das Werkzeugunterteil 16 eingebaut, dass seine Achse 28 auf eine zu bearbeitende Fläche gerichtet ist, bzw. senkrecht zu der zu bearbeitenden Fläche der Blechplatte 14 steht. Wie aus Fig. 3c dann zu sehen ist wird der Freiwinkel β zwischen der Ebene senkrecht zur Achse 28, die also wie die Fläche der Blechplatte 14 angeordnet ist, und den Verdrängkanten 24 gebildet, so dass die ersten Enden 26 der Verdrängkanten 24 einen geringeren Abstand von der zu bearbeitenden Fläche der Blechplatte 14 haben als die zweiten Enden 27.

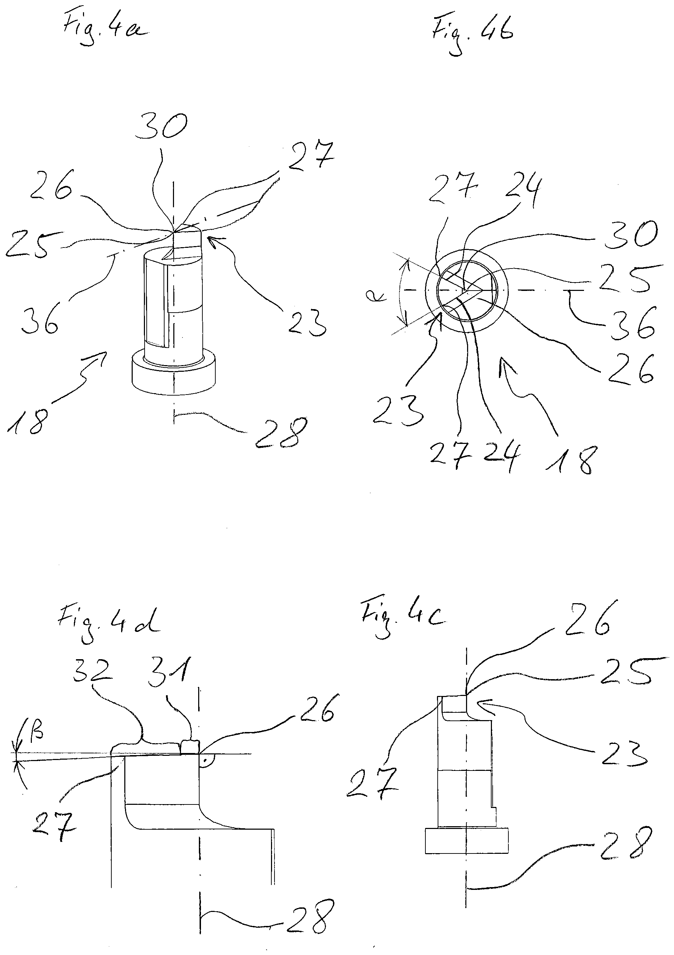

In Fig. 4a ist eine isometrische Darstellung des Stempels 18 in einer zweiten Ausführungsform gezeigt. Die Figuren 4b und 4c zeigen jeweils eine Draufsicht und eine Seitenansicht des Stempels 18. Fig. 4d ist ein vergrößerter Abschnitt des Stempels 18 von Fig. 4c.

Der Stempel 18 in der zweiten Ausführungsform weist ebenso wie der Stempel 18 in der ersten Ausführungsform die Verdrängkanten 24 auf, die die Spitze 25 des Verdrängabschnitts 23 bilden. Die Verdrängkanten 24 haben auch hier das erste Ende 26 und das zweite Ende 27 und die Symmetrieachse 36. Die zweite Ausführungsform des Stempels 18 unterscheidet sich von der ersten Ausführungsform darin, dass die Verdrängkanten 24 nicht geradlinig sind, sondern jeweils in einen ersten Abschnitt 31 und in einen zweiten Abschnitt 32 unterteilt sind. Die jeweils ersten Abschnitte 31 befinden sich an dem jeweils ersten Ende 26 der Verdrängkanten 24 und schließen mit der Achse 28 einen rechten Winkel ein. Dadurch wird ein Plateau 30 gebildet, auf dem die Achse 28 senkrecht steht. Die zweiten Abschnitte 32 der Verdrängkanten 24 schließen wiederum einen Freiwinkel β mit der Achse 28 ein, so dass die zweiten Enden 27 der Verdrängkanten 24 in der in Fig. 2 gezeigten Situation jeweils wieder einen größeren Abstand von der zu bearbeitenden Fläche der Blechplatte 14 haben als die ersten Enden 26.

In alternativen Ausführungsformen müssen die Verdrängkanten 24 nicht zwingend in zwei Abschnitte 31, 32 unterteilt sein, sondern können auch in noch mehr Abschnitte unterteilt sein.

Der Verdrängabschnitt 23 kann optional mit einem zusätzlichen Schneidelement 33, wie in Fig. 2 gezeigt, an der Spitze versehen sein, um die Folie sauber zu trennen.

Der Stempel 18 mit dem Verdrängabschnitt 23 ist hier so dargestellt, dass er in das Werkzeugunterteil 16 eingebaut ist, um die Schutzfolie 29 von der Unterseite der Blechplatte 14 zu entfernen. Alternativ oder zusätzlich kann der Stempel 26 mit dem Verdrängabschnitt 23 auch in das Werkzeugoberteil 17 eingebaut sein, um die Schutzfolie 29 von der Oberseite der Blechplatte 14 zu entfernen.

Der Stempel 18 ist so in das Werkzeugunterteil 16 und das Werkzeugunterteil 16 ist so in die untere Werkzeugaufnahme 5 aufgenommen, dass seine Achse 28 mit der Drehachse 6 der unteren Werkzeugaufnahme 5 fluchtet. Analog gilt dies für die Verwendung des Stempels 18 in dem Werkzeugoberteil 17.

Das Werkstück ist hier die Blechplatte 14, kann alternativ aber auch aus einem anderen Material bestehen oder eine andere Form aufweisen, solange es erforderlich ist, eine Schutzfolie von einer zu bearbeitenden Fläche zu entfernen.

Im Betrieb wird die Schutzfolie 29 von einem Bereich der zu bearbeitenden Fläche der Blechplatte 14 entfernt. Der Bereich entspricht üblicherweise einer Bahn, die durch eine Schneidbahn, nämlich durch eine Kontur eines Werkstücks 14, bestimmt wird. Die Schneidbahn muss sich innerhalb des Bereichs befinden und einen ausreichenden Abstand zu dem Rand der Bahn haben, da bei einem zu geringen Abstand die Gefahr besteht, dass die Schutzfolie 29 wiederum geschmolzen wird, was zu Schlacke und Perlenbildung führen kann.

Dazu wird die Blechplatte 14 in eine Position bewegt, so dass sich die Achse 28 des Verdrängabschnitts 23 an einem gewünschten Startpunkt der Bahn befindet. In einer alternativen Ausführungsform wird nicht die Blechplatte 14, sondern der Stempel 18 bewegt. Anschließend nähert sich der Verdrängabschnitt 23 des Stempels 18 an die Blechplatte 14 an, bis die Spitze 25 in die Schutzfolie 29 eindringt bzw. die Schutzfolie 29 so verformt, dass die Schutzfolie 29 bei einem anschließenden Bewegen der Blechplatte 14 durch die Spitze 25 getrennt wird und die Schutzfolie 29 durch die Verdrängkanten 24 aus der Bahn verdrängt wird.

Vor dem Bewegen der Blechplatte 14 zum Verdrängen der Schutzfolie 29 wird der Stempel 18 so verdreht, dass die Spitze 25 den Verdrängkanten 24 in einer Relativbewegung des Verdrängabschnitts 23 zu der Blechplatte 14 vorauseilt. Bei geradlinigen Bahnabschnitten ist der Stempel 18 so gedreht, dass die Verdrängkanten 24 symmetrisch zu einer Bewegungsrichtung sind.

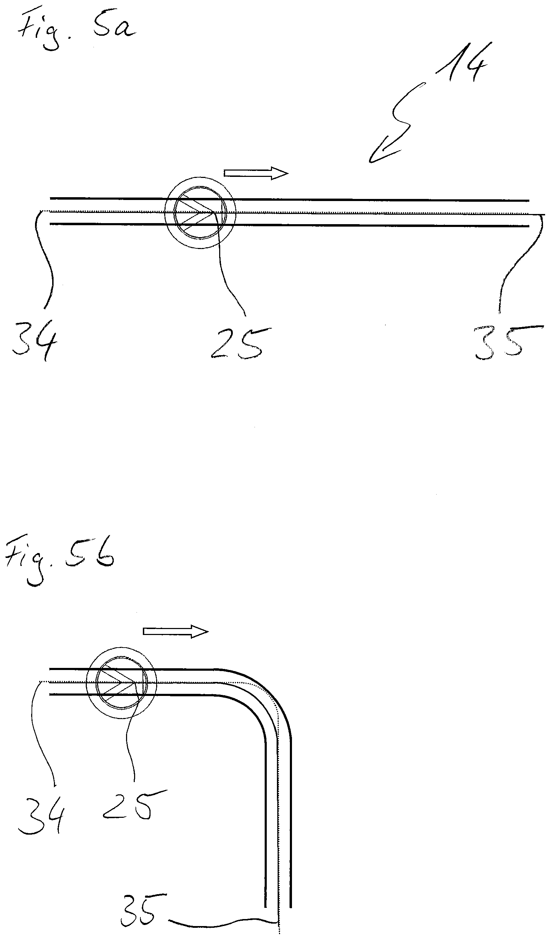

In Fig. 5a ist exemplarisch eine geradlinige Schneidbahn 34 gezeigt, entlang der mittels eines Laserstrahls die Blechplatte 14 geschnitten wird. Aus Gründen der Darstellbarkeit ist ein Weg 35 der Spitze 25 des Stempels in einer durchgezogenen Linie dargestellt, die neben der gepunktet dargestellten Schneidbahn 34 liegt. Tatsächlich decken sich die Schneidbahn 34 und der Weg 35.

Bei einem Verdrängen der Schutzfolie 29 auf einer Bahn mit Radien wird der Stempel 18 zusätzlich zu dem Bewegen des Stempels 18 relativ zu der Blechplatte 14 entlang des Wegs 35 so gedreht, dass die Symmetrieachse 36 der Verdrängkanten 24 tangential zu dem Weg 35 ist. Dadurch ist die relative Geschwindigkeit des Stempels 18 zur Blechplatte 14 am Außenradius der Bahn größer als am Innenradius.

Wenn die Radien klein sind, ist nicht mehr gewährleistet, dass die relative Bewegung am Innenradius stetig ist. Durch das zusätzliche Drehen zu dem Bewegen entlang des Wegs 35 besteht die Gefahr, dass das zweite Endes 27 der Verdrängkante 24 am Innenradius der Bahn relativ zur Blechplatte 14 stehen bleibt oder sich sogar in eine Richtung entgegengesetzt zu der Richtung der Spitze 25 bewegt. Dadurch entstehen aber wiederum Folienschnipsel, die dann den Schneidprozess beeinträchtigen können.

Wie in Fig. 5b gezeigt, wird aus diesem Grund für eine Schneidbahn 34 mit kleinem Radius, beispielsweise kleiner als 5 mm, der Radius des Wegs 35, auf dem sich die Spitze 25 bewegt, größer gewählt. Im Falle des Radius der Schneidbahn 34 von 5 mm wird der Radius des Wegs 35 um 1 mm größer, also auf 6 mm festgelegt. Aus Gründen der Darstellbarkeit ist auch hier der Weg 35 der Spitze 25 des Stempels in einer durchgezogenen Linie dargestellt, die neben der gepunktet dargestellten Schneidbahn 34 liegt. Tatsächlich decken sich die Schneidbahn 34 und der Weg 35 auch hier in den geraden Bereichen.

Im Falle von Bahnen für Schneidbahnen 34 mit spitzen Winkeln ist es schwierig, die Schutzfolie 29 zu verdrängen, da eine der Verdrängkanten 24 bei einem Verdrehen des Stempels 18 die verdrängte Schutzfolie 29 nochmals überstreicht, wodurch wiederum Folienschnipsel entstehen können. Hier bringt die Verwendung des Werkzeugs mit dem Stempel 18 mit dem Verdrängabschnitt 23 gemäß der zweiten Ausführungsform mit dem Plateau 30 den Vorteil, dass auch bei sehr engen Radien keine oder minimale Folienschnipsel entstehen, welche durch die Absaugung abgesaugt werden können, da das Plateau 30 immer flächig an der zu bearbeitenden Fläche anliegt.

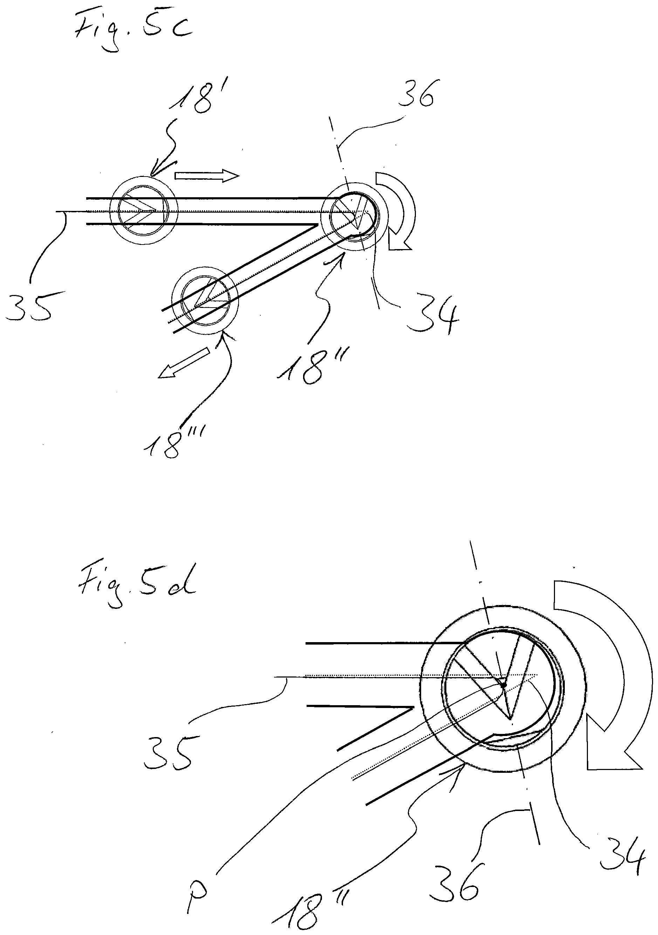

In Fig. 5c bewegt sich der Stempel 18 zu Beginn der Verfahrbewegung, wie durch den Stempel 18' dargestellt, analog zu der in Fig. 5a gezeigten Bewegung. Aus Gründen der Darstellbarkeit ist auch hier der Weg 35 der Spitze 25 des Stempels in einer durchgezogenen Linie dargestellt, die neben der gepunktet dargestellten Schneidbahn 34 liegt. Tatsächlich decken sich die Schneidbahn 34 und der Weg 35 auch hier in den geraden Bereichen. Die Schneidbahn 34 weist jedoch dann einen spitzen Winkel auf und verläuft dann wiederum geradlinig, wobei sich der Stempel 18, wie durch den Stempel 18''' dargestellt, wiederum wie zu Beginn der Verfahrbewegung geradlinig bewegt. In dem spitzen Winkel folgt der mit der durchgezogenen Linie dargestellte Weg 35 der Spitze 25 jedoch nicht der mit der gepunkteten Linie dargestellten Schneidbahn 34. Hier folgt die der Weg 35 der Spitze 25 einem Radius, hier R 0,5 mm, der dem spitzen Winkel einbeschrieben ist. Radien von anderen Größen werden alternativ in Abhängigkeit von der Größe des Winkels festgelegt. Gleichzeitig wird der Stempel 18 verdreht, wie es in einer Momentaufnahme des Stempels 18" gezeigt ist, so dass die Symmetrieachse 36 der Verdrängkanten 24 tangential zu dem Weg 35 ist. Die Verfahrbewegung des Stempels 18 ist mit dem Verdrehen so abgestimmt, dass sich die Schneidbahn 34 immer in dem Bereich, in dem die Schutzfolie 29 verdrängt wird, befindet.

Wie in Fig. 5d, in einer vergrößerten Ansicht eines Abschnitts der Bahn in Fig. 5c, gezeigt ist, bewegt sich der Stempel 18 optional relativ zu der Blechplatte 14 so, dass er bis zu einem Punkt P des Wegs 35 im Scheitel des in den spitzen Winkel der Schneidbahn 34 einbeschriebenen Radius des Wegs 35 fährt. Anschließend führt der Stempel 18 eine vollständige Umdrehung um die Achse 28, also um die Spitze 25, aus, so dass die Schutzfolie im Bereich des spitzen Winkels verdrängt wird. Der Stempel 18 wird um den Punkt P im Scheitel des Wegs 35 gedreht. Alternativ wird die Umdrehung nicht um den Punkt P ausgeführt, sondern um einen anderen Punkt im Bereich des spitzen Winkels der Schneidbahn 34. In einer weiteren Alternative wird der Stempel 18 nicht um einen Punkt gedreht, sondern so gedreht, dass die Achse 28 eine kreisförmige Bewegung, beispielsweise mit einem Radius von 0,1 mm, um den Punkt ausführt. Durch die Drehung wird die Schutzfolie 29 großflächiger um den Winkel verdrängt, was eine Verbesserung des Laserschnitts mit sich bringt. Nach der Drehung wird ausgehend von einer Position, in der die Symmetrieachse 36 der Verdrängkanten 24 wieder tangential zu dem Weg 35 ist, die Bewegung der Spitze 25 entlang dem Weg 35 ausgeführt.

## Patentansprüche

1. Werkzeug für eine Bearbeitungsmaschine (1) zum Verdrängen einer Schutzfolie (29) auf einem Werkstück (14), das eine durch das Werkzeug zu bearbeitende Fläche aufweist, wobei das Werkzeug einen der zu bearbeitenden Fläche zugewandten Verdrängabschnitt (23) aufweist, um einen Bereich in der zu bearbeitenden Fläche zu erzeugen, in dem die Schutzfolie (29) verdrängt ist,
wobei der Verdrängabschnitt (23) eine auf die zu bearbeitende Fläche gerichtete Achse (28) und zwei Verdrängkanten (24) aufweist, die sich in einem Punkt der Achse (28) schneiden, so dass der Verdrängabschnitt (24) in Richtung der Achse (28) gesehen einen im Wesentlichen keilförmigen Querschnitt mit einer Spitze (25) und mit den zwei an der Spitze (25) angrenzenden Verdrängkanten (24) aufweist, und die Verdrängkanten (24) an der Spitze (25) ein erstes Ende (26) und gegenüberliegend ein zweites Ende (27) haben,
die Verdrängkanten (24) senkrecht
zu der Achse (28) zueinander einen Keilwinkel (α) einschließen,
zumindest ein gleicher Abschnitt (31, 32) der zwei Verdrängkanten (24) mit einer Ebene, die senkrecht zu der Achse (28) orientiert ist, einen identischen Freiwinkel (β) einschließt, so dass die zweiten Enden (27) der Verdrängkanten (24) in Richtung der Achse (28) einen Abstand von den ersten Enden (26) haben,
und die Verdrängkanten (24) verrundet sind oder eine Fase aufweisen.

2. Werkzeug gemäß Anspruch 1, wobei, wenn die Achse (28) senkrecht auf der zu bearbeitenden Fläche des Werkstücks (14) steht, die ersten Enden (26) der Verdrängkanten (24) einen geringeren Abstand von der zu bearbeitenden Fläche als die zweiten Enden (27) haben.

3. Werkzeug gemäß Anspruch 1 oder 2, wobei die Verdrängkanten (24) vom ersten Ende (26) bis zum zweiten Ende (27) geradlinig sind.

4. Werkzeug gemäß Anspruch 1 oder 2, wobei die Verdrängkanten (24) jeweils mindestens zwei Abschnitte (31, 32) aufweisen und ein erster Abschnitt (31) an dem ersten Ende (26) mit der Achse (28) jeweils einen rechten Winkel einschließt.

5. Werkzeug gemäß einem der Ansprüche 1 bis 4, wobei der Verdrängabschnitt (24) federnd in dem Werkzeug gelagert ist.

6. Werkzeug gemäß einem der Ansprüche 1 bis 4, wobei der Verdrängabschnitt (24) in dem Werkzeug (7) unnachgiebig gelagert ist, und das Werkzeug (7) einen federnden Auswerfer (20) aufweist.

7. Werkzeug gemäß einem der vorangehenden Ansprüche, wobei der Verdrängabschnitt (24) mit einem zusätzlichen Schneidelement (33) versehen ist, um die Schutzfolie (29) zu schneiden.

8. Werkzeugsatz (7) mit einem Werkzeug gemäß einem der Ansprüche 1 bis 7, wobei ein Gegenwerkzeug eine drehbare Kugel aufweist, um eine Gegenkraft für das Verdrängen zu erzeugen.

9. System aus einem Werkzeug gemäß einem der Ansprüche 1 bis 7 oder einem Werkzeugsatz (7) gemäß Anspruch 8 und einer Bearbeitungsmaschine (1), wobei die Bearbeitungsmaschine (1) eine obere Werkzeugaufnahme (4) und eine axial verdrehbare untere Werkzeugaufnahme (5) aufweist, und das Werkzeug in die untere Werkzeugaufnahme (5) aufgenommen ist und das Gegenwerkzeug ggf. in die obere Werkzeugaufnahme (4) aufgenommen ist.

10. System gemäß Anspruch 9, wobei die axial drehbare Werkzeugaufnahme (4, 5) eine Drehachse (6) aufweist, und die Achse (28) des Verdrängabschnitts (23) des Werkzeugs so angeordnet ist, dass die Achse (28) und die Drehachse (6) der drehbaren Werkzeugaufnahme (4, 5) fluchten.

11. System gemäß Anspruch 9 oder 10, wobei die Bearbeitungsmaschine (1) eine kombinierte Stanz-Laser-Maschine ist.

12. Verfahren zum Erzeugen eines Bereichs einer zu bearbeitenden Fläche eines Werkstücks (14), in dem eine Schutzfolie (29) verdrängt ist, mit einem System gemäß einem der Ansprüche 9 bis 11 mit den Schritten:
- Annähern des Verdrängabschnitts (23) an die zu bearbeitende Fläche des Werkstücks (14) bis die Spitze (25) in die Schutzfolie (29) eindringt oder die Schutzfolie (29) so verformt, dass die Schutzfolie (29) bei einem anschließenden Bewegen des Werkstücks (14) durch die Spitze (25) getrennt wird;
- Bewegen des Werkstücks (14) mittels einer Werkstückverfahreinrichtung der Bearbeitungsmaschine (1) oder des Stempels (18) entlang eines Wegs (35) und Verdrehen des Werkzeugs, so dass die Spitze (25) den Verdrängkanten (24) in einer Relativbewegung des Verdrängabschnitts (23) zu dem Werkstück (14) vorauseilt, so dass der Verdrängabschnitt (23) die Schutzfolie (29) in dem Bereich verdrängt.

13. Verfahren gemäß Anspruch 12 mit einem System gemäß Anspruch 11, wobei erst in einem Arbeitsgang die Schutzfolie (29) in dem Bereich verdrängt wird und anschließend in einem zweiten Arbeitsgang das Werkstück (14) mittels eines Laserstrahls auf einer vorbestimmten Schneidbahn (34) geschnitten wird, wobei so entlang des Wegs (35) verfahren wird, dass sich die Schneidbahn (34) innerhalb des Bereichs befindet.

14. Verfahren gemäß Anspruch 13, wobei das Werkstück (14) oder der Stempel (18) entlang des Wegs (35) so verfahren wird und das Werkzeug so verdreht wird, dass der Weg (35) der Spitze (25) in einem spitzen Winkel der Schneidbahn (34) des Laserstrahls einen Radius aufweist, der dem spitzen Winkel der Schneidbahn (34) einbeschrieben ist.

15. Verfahren gemäß Anspruch 14, wobei das Verfahren die zusätzlichen Schritte aufweist:
- Bewegen des Werkstücks (14) oder des Stempels (18) entlang des Wegs (35) bis zu einem Punkt (P) des Radius, wobei der Stempel (18) so verdreht wird, dass eine Symmetrieachse (36) der Verdrängkanten (24) in dem Radius tangential zu dem Weg (35) ist;
- Ausführen einer vollständigen Umdrehung des Stempels (18) um die Achse (28) ; und
weiteres Bewegen des Werkstücks (14) oder des Stempels (18) entlang des Wegs (35) wobei die Symmetrieachse (36) der Verdrängkanten (24) in dem Radius tangential zu dem Weg (35) ist.

## Claims

1. Tool, for a processing machine (1), for displacing a protection film (29) on a workpiece (14) comprising a surface to be machined by the tool, wherein the tool comprises a displacement portion (23) facing the surface to be machined in order to generate an area in the surface to be machined where the protection film (29) is displaced,
wherein the displacement portion (23) comprises an axis (28) directed to the surface to be machined and two displacement edges (24) intersecting at a point of the axis (28) so that the displacement portion (24) comprises, seen in the direction of the axis (28), a basically wedge-shaped cross section having a tip (25) and the two displacement edges (24) adjoining to the tip (25), and the displacement edges (24) have a first end (26) at the tip (25) and a second end (27) oppositely,
the displacement edges (24) confine a wedge angle (α) being perpendicular to the axis (28) to one another,
at least one similar portion (31, 32) of the two displacement edges (24) confines an identical clearance angle (β) with a plane oriented perpendicular with respect to the axis (28) so that the second ends (27) of the displacement edges (24) have a distance from the first ends (26) in the direction of the axis (28),
and the displacement edges (24) are rounded or comprise a chamfer.

2. Tool according to claim 1, wherein, when the axis (28) is perpendicular with respect to the surface to be machined of the workpiece (14), the first ends (26) of the displacement edges (24) have a smaller distance from the surface to be machined than the second ends (27).

3. Tool according to claim 1 or 2, wherein the displacement edges (24) are straight from the first end (26) to the second end (27).

4. Tool according to claim 1 or 2, wherein the displacement edges (24) respectively comprise at least two portions (31, 32), and a first portion (31) at the first end (26) respectively confines a right angle with the axis (28).

5. Tool according to anyone of claims 1 to 4, wherein the displacement portion (24) is resiliently supported in the tool.

6. Tool according to anyone of claims 1 to 4, wherein the displacement portion (24) is rigidly supported in the tool (7), and the tool (7) comprises a resilient ejector (20).

7. Tool according to anyone of the preceding claims, wherein the displacement portion (24) is provided with an additional cutting member (33) in order to cut the protection film (29) .

8. Tool set (7) with a tool according to anyone of claims 1 to 7, wherein a counter tool comprises a rotatable ball in order to generate a counter force for the displacement.

9. System of a tool according to anyone of claims 1 to 7, or a tool set (7) according to claim 8 and a processing machine (1), wherein the processing machine (1) comprises an upper tool holder (4) and an axially rotatable lower tool holder (5), and the tool is accommodated in the lower tool holder (5) and the counter tool is possibly accommodated in the upper tool holder (4).

10. System according to claim 9, wherein the axially rotatable tool holder (4, 5) comprises a rotation axis (6), and the axis (28) of the displacement portion (23) of the tool is arranged such that the axis (28) and the rotation axis (6) of the rotatable tool holder (4, 5) are aligned.

11. System according to claim 9 or 10, wherein the processing machine (1) is a combined punching-laser machine.

12. Method for generating an area of a surface to be processed of a workpiece (14) in which a protection film (29) is displaced with a system according to anyone of claims 9 to 11 having the steps:
- approaching the displacement portion (23) to the surface to be machined of the workpiece (14) until the tip (25) penetrates into the protection film (29) or deforms the protection film (29) such that the protection film (29) is split by the tip (25) upon a subsequent motion of the workpiece (14);
- moving the workpiece (14) by means of a workpiece transfer device of the processing machine (1) or moving the stamp (18) along a way (35) and rotating the tool so that the tip (25) runs ahead of the displacement edges (24) in a relative motion of the displacement portion (23) with respect to the workpiece (14) so that the displacement portion (23) displaces the protection film (29) in the area.

13. Method according to claim 12 with a system according to claim 11, wherein, firstly, in a working step, the protection film (29) is displaced in the area and, in a second working step, the workpiece (14) is subsequently cut by means of a laser beam on a predetermined cutting way (34), wherein travelling is along the way (35) such that the cutting way (34) is located within the area.

14. Method according to claim 13, wherein the workpiece (14) or the stamp (18) are moved along the way (35) and the tool is rotated such that the way (35) of the tip (25) comprises a radius in an acute angle of the cutting way (34) of the laser beam, the radius being inscribed in the acute angel of the cutting way (34).

15. Method according to claim 14, wherein the method comprises the additional steps:
- moving the workpiece (14) or the stamp (18) along the way (35) up to a point (P) of the radius, wherein the stamp (18) is rotated such that a symmetry axis (36) of the displacement edges (24) is tangential to the way (35) in the radius;
- Executing a complete rotation of the stamp (18) around the axis (28); and
- further travelling the workpiece (14) or the stamp (18) along the way (35), wherein the symmetry axis (36) of the displacement edges (24) is tangential to the way (35) in the radius.

## Revendications

1. Outil destiné à une machine d'usinage (1) pour refouler un film de protection (29) sur une pièce (14) qui comporte une surface devant être usinée par l'outil, l'outil comportant un segment de refoulement (23) tourné vers la surface à usiner pour permettre d'obtenir une zone dans la surface à usiner dans laquelle le film de protection (29) est refoulé,
le segment de refoulement (23) ayant un axe (28) orienté vers la surface à usiner et deux arêtes de refoulement (24) qui se coupent en un point de l'axe (28) de sorte que le segment de refoulement (24) ait, dans la direction de l'axe (28) une section essentiellement en forme de coin munie d'une pointe (25) et de deux arêtes de refoulement (24) adjacentes à la pointe (25), et que les arêtes de refoulement (24) aient au niveau de la pointe (25) une première extrémité (26) et une seconde extrémité (27) située à l'opposée de celle-ci,
les arêtes de refoulement (24) délimitant entre elles perpendiculairement à l'axe (28) un angle de tranchant (a),
au moins un segment égal (31, 32) des deux arêtes de refoulement (24) délimitant, avec un plan orienté perpendiculairement à l'axe (28) un angle de dépouille identique (β), de sorte que les secondes extrémités (27) des arêtes de refoulement (24) soient, en direction de l'axe (28) à une distance des premières extrémités (26), et
les arêtes de refoulement (24) étant arrondies ou comportant un biseau.

2. Outil conforme à la revendication 1,
dans lequel, lorsque l'axe (28) est perpendiculaire à la surface de la pièce (14) à usiner, les premières extrémités (26) des arêtes de refoulement (24) sont à une plus faible distance de la surface à usiner que les secondes extrémités (27).

3. Outil conforme à la revendication 1 ou 2,
dans lequel les arêtes de refoulement (24) s'étendent linéairement de la première extrémité (26) à la seconde extrémité (27).

4. Outil conforme à la revendication 1 ou 2,
dans lequel les arêtes de refoulement (24) comportent chacune au moins deux segments (31, 32), et à la première extrémité (26), un premier segment (31) délimite respectivement un angle droit avec l'axe (28).

5. Outil conforme à l'une des revendications 1 à 4,
dans lequel le segment de refoulement (24) est monté élastiquement dans l'outil.

6. Outil conforme à l'une des revendications 1 à 4,
dans lequel le segment de refoulement (24) est monté non flexible dans l'outil (7) et l'outil (7) comprend un éjecteur élastique (20).

7. Outil conforme à l'une des revendications précédentes,
dans lequel le segment de refoulement (24) est équipé d'un élément de coupe (33) supplémentaire pour permettre de couper le film de protection (29).

8. Jeu d'outils (7) comprenant un outil conforme à l'une des revendications 1 à 7, un outil antagoniste comportant une bille mobile en rotation pour permettre d'obtenir une force antagoniste pour le refoulement.

9. Système constitué par un outil conforme à l'une des revendications 1 à 7, ou d'un jeu d'outils (7) conforme à la revendication 8 et d'une machine d'usinage (1), la machine d'usinage (1) comprenant un logement de réception d'outil supérieur (4) et un logement de réception d'outil inférieur (5) mobile en rotation axiale, l'outil étant logé dans le logement de réception d'outil inférieur (5) et l'outil antagoniste étant, le cas échéant, logé dans le logement de réception d'outil supérieur (4).

10. Système conforme à la revendication 9,
dans lequel le logement de réception d'outil (4, 5) mobile en rotation axiale comporte un axe de rotation (6) et l'axe (28) du segment de refoulement (23) de l'outil est positionné de sorte que l'axe (28) et l'axe de rotation (6) du logement de réception d'outil mobile en rotation (4, 5) soient alignés.

11. Système conforme à la revendication 9 ou 10,
dans lequel la machine d'usinage (1) est une machine combinée de poinçonnage-laser.

12. Procédé d'obtention d'une zone d'une surface à usiner d'une pièce (14) selon lequel un film de protection (29), est refoulé avec un système conforme à l'une des revendications 9 à 11 comprenant des étapes consistant à :
- approcher le segment de refoulement (23) de la surface à usiner de l'outil (14) jusqu'à ce que la pointe (25) pénètre dans le film de protection (29), ou que le film de protection (29) est déformé de sorte qu'il soit séparé par la pointe (25) lors d'un déplacement ultérieur de la pièce (14),
- déplacer la pièce (14) au moyen d'une installation de déplacement de pièce de la machine d'usinage (1) ou du poinçon (18) le long d'un trajet (35) et tourner l'outil de sorte que la pointe (25) devance les arêtes de refoulement (24) dans un mouvement relatif du segment de refoulement (23) vers la pièce (14) pour que le segment de refoulement (23) refoule le film de protection (29) dans la zone.

13. Procédé conforme à la revendication 12,
mis en oeuvre avec un système conforme à la revendication 11, selon lequel dans une première étape de travail, le film de protection (29) est refoulé dans la zone puis, dans une seconde étape de travail, la pièce (14) est coupée au moyen d'un faisceau laser sur une piste de coupe (34) prédéterminée, le déplacement le long du trajet (35) étant effectué de sorte que la piste de coupe (34) soit située dans la zone.

14. Procédé conforme à la revendication 13,
selon lequel la pièce (14) ou le poinçon (18) est déplacé le long du trajet (35) et l'outil est tourné de sorte que le trajet (35) de la pointe (25), ait dans un angle de pointe de la piste de coupe (34) du faisceau laser un rayon qui est inscrit dans l'angle de pointe de la piste de coupe (34).

15. Procédé conforme à la revendication 14,
comprenant en outre des étapes consistant à :
- déplacer la pièce (14) ou le poinçon (18) le long du trajet (35) jusqu'à un point (P) du rayon, le poinçon (18) étant tourné de sorte que l'axe de symétrie (36) des arêtes de refoulement (24) soit dans le rayon tangentiel au trajet (35),
- effectuer une rotation complète du poinçon (18) autour de l'axe (28), et
- poursuivre le déplacement de la pièce (14) ou de l'outil (18) le long du trajet (35), l'axe de symétrie (36) des arêtes de refoulement (24) étant dans le rayon tangentiel au trajet (35).
